# EUROPEAN PATENT APPLICATION

(11) **EP 1 962 216 A2**
(43) Date of publication of application: **27.08.2008**
(21) Application number: 08151637.9
(22) Date of filing: 19.02.2008
(51) Int. Cl.: G06F 21/00

(54) **Method for detecting duplicated instances of a software license**

(30) Priority: 22.02.2007 US 677953
(71) Applicant: Aladdin Knowledge Systems, Petach Tikva (IL)
(72) Inventor: Zunke, Michael, Kirchheim 85551 (DE); Margalit, Yanki, Ramat-Gan 52223 (IL); Margalit, Dany, Ramat Gan (IL)
(74) Representative: Freeman, Avi

(57) **Abstract**

A method for issuing and updating a software program license for a computer, with a unique identifier data object embedded in the computer and referenced by the license. The unique identifier may also be used with a conventional computer fingerprint. The software program does not run on a computer without a license that references the unique identifier. The license is issued via a server over a network (such as the Internet) and must be regularly updated by the server. When updating, the present unique identifier is sent to the server, to verify that the unique identifier is the latest unique identifier issued for that license. If an unauthorized copy is made for operation on an unlicensed computer, such as by cloning the licensed computer, this is detected when the second computer is updated, because the unique identifier sent with the update request is no longer current.

## Description

### FIELD OF THE INVENTION

The present invention relates to software licensing management, and, more particularly, to a method for detecting the presence of duplicated instances of a software license in an environment which supports license issue based on a software license key.

### BACKGROLTND OF THE INVENTION

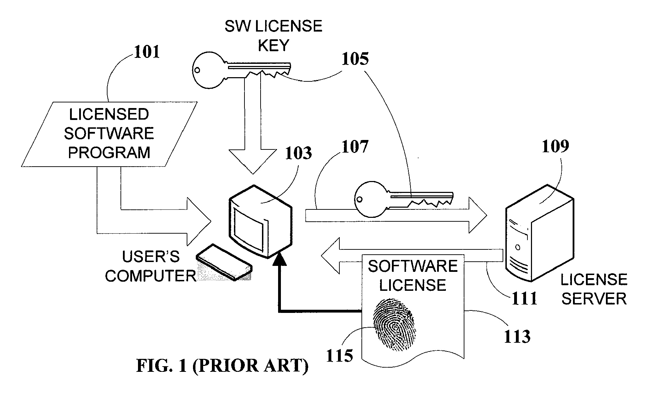

A common prior-art scheme for managing licenses for a licensed software program is to issue a software key to the authorized user, as illustrated in Figure 1. An authorized user (not shown) obtains a licensed software program **101** for use in a computer **103.** Licensed software program **101** can be obtained as a download over a data network (not shown), recorded on a physical medium such as a CD-ROM (not shown), or supplied to the authorized user in any other suitable fashion for installation on computer **103.**

### Software License Keys

Associated with software program **101** is a software license key **105,** which is specially-prepared information furnished by the licensor of licensed software program **101** to an authorized user thereof, typically in the form of an encoded series of characters which the authorized user enters into computer **103,** typically via the keyboard thereof. The terms "software license key" and "license key" herein denote such information which can be used to obtain a software license. The terms "software license" and "license" herein denote information in machine-readable form (i.e., in a form which can be used directly by a computer) which is used via a computer to determine the extent to which a specified licensed computer software program may be used or operated on that computer. Typically, such a software license reflects the permitted usage conditions of a legal license extended to authorized users of the software program by a licensor of that software program.

Software license key **105** can also be supplied in machine-readable form for automatic input directly into computer **103,** such as over a data network. Various formats for license key **105** are possible, including, but not limited to: plain text (ASCII); "Extensible Rights Markup Language" (XrML); and "Usage Rights Language", such as the "Digital Property Rights Language" (DPRL). The term "information" herein denotes any data which can be stored, retrieved, manipulated, and otherwise processed by computer.

Without a valid license, software **101** will not operate in a regular fashion. Typically, in the absence of a valid software license, licensed software **101** either does not operate at all, or operates in a reduced fashion, such as in a partially-disabled demonstration mode, or for a limited time only. A software license **113** is required to use software **101** in a regular manner. When software license **113** is installed in computer **103,** licensed software **101** detects the presence of software license **113** and operates in a regular manner.

### Obtaining a Software License via a License Key

Software key **105** by itself does not permit use of licensed software **101,** but is used to obtain a license. To obtain license **113,** software key **105** is sent to a license server **109** via a license request **107.** License server **109** is typically a remote server on a network (not shown), such as the Internet. Because software key **105** is an item of information rather than a physical object, sending software key **105** to server **109** is equivalent to sending a copy of software key **105** to server **109 -** that is, even after sending software key **105** to server **109,** software key **105** remains loaded in computer **103.**

Upon receipt of the software key **105,** server **109** confirms the validity of software license key **105** and issues license **113** to computer **103** via a license issue **111.** In many cases, software license **113** authorizes the user to operate software **101** on only a single computer at a time. For such cases, software license **113** is typically linked to computer **103** via a fingerprint **115** associated with license **113,** such that license **113'** does not enable software **101** to operate on any other computer besides computer **103.** This prevents the user from installing software **101** on multiple computers and using a single license to enable multiple-computer use in violation of the terms of the license. It is noted that installing or copying software **101** onto multiple computers is usually a simple matter, and that software key **105** is also easily copied onto multiple computers. Enforcement of the license terms is therefore dependent on the linking of software license **113** to computer **103** via fingerprint **115.**

Both the computer program and the license for operating the computer program are typically installed on the computer. The terms "install", "installed", "installation", and variants thereof, herein denote the loading of these data items in machine-readable form on the computer, or the rendering of these items in equivalently-accessible form to the computer. In order for the computer software to be executable by the computer, the license must be directly accessible by the computer, and both execution and access are enabled by installation.

### Computer Fingerprints

The term "fingerprint" herein denotes machine-readable information intended to identify a specific computer and thereby distinguish that specific computer from other computers. A fingerprint typically contains a predetermined function of one or more characteristics of a computer such that the fingerprints for different computers have a suitably-high probability of being different. Thus, one way to consider a fingerprint is as a hashing function of the computer's individual characteristics.

Characteristics of a computer used for generating, creating, or deriving fingerprints include, but are not limited to: hardware-specific characteristics, such as machine-readable serial numbers for hardware components (such as the processor, hard disk drive, etc.); data-specific aspects, such as the data stored therein and the organization of the data stored therein; configuration-specific aspects, such as operating system parameters and characteristics; and network-specific aspects, such as network address, MAC address, and the like.

The configuration and characteristics of a computer that is identified by a particular fingerprint will change gradually in the course of normal usage. Therefore, a computer which is identified by a particular fingerprint may, after a certain amount of usage, no longer be identifiable by that fingerprint. It is therefore desirable to be able to associate a computer with the originally-given fingerprint, even after a certain amount of change has taken place. Thus, fingerprints are typically matched to their respective computers in a manner that tolerates a certain amount of mismatch. As a consequence, fingerprint matching is not perfectly precise, and as a result, fingerprints are not unique - a given fingerprint can correspond to more than one computer, and a given computer at different times can correspond to different fingerprints. This non-uniqueness of fingerprints is a fundamental prior-art weakness in the use of fingerprints to enforce software license terms.

### Updating a Software License

As noted above, during the course of the authorized user's legitimate use of software **101,** it may happen that the characteristics of computer **103** change in such a way that fingerprint **115** no longer properly identifies computer **103.** As non-limiting examples of this: certain operating system parameters may change; and/or hardware additions or replacements may take place. Similarly, it may happen that the authorized user obtains a new computer and wishes to move his or her software and data to the new computer. Under such conditions, despite the tolerance typically exercised in matching fingerprint to computer, it is to be expected that at some point software license **113** as tied to fingerprint **115** no longer serves to enable software **101.** Provisions are therefore typically made in the prior art for the authorized user to obtain an updated software license for using software **101.** The updated software license is tied to a new fingerprint of the changed computer.

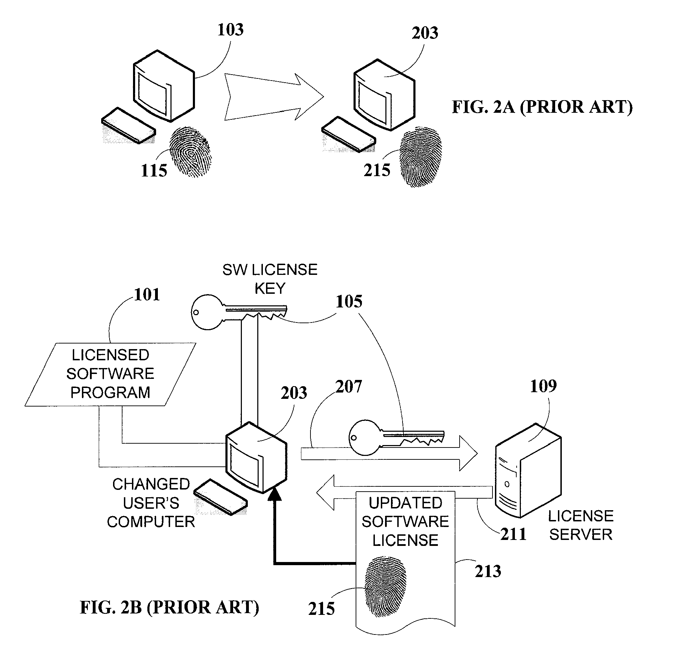

Figure 2A conceptually illustrates a change in computer **103** having a fingerprint **115** into a computer **203** having a fingerprint **215.** Computer **203** may be physically the same computer as computer **103,** with only logical changes, such as to the operating system configuration. Alternatively, computer **203** may be physically distinct from computer **103,** for example, having a replaced hardware component, or being a completely different computer. In any case, fingerprint **215** of computer **203** is highly different from fingerprint **115** of computer **103,** and hence software license **113** (Figure 1) will not enable licensed software **101** to operate on computer **203.**

Figure 2B conceptually illustrates how the authorized user (not shown) obtains an updated license **215** which allows operation of licensed software **101** on computer **203.** In certain cases, software **101** is already installed on computer **203.** Additionally, in certain cases, software license key **105** is already installed on computer **203.** In any event, in a license request **207,** software license key **105** is sent to license server **109,** in a manner similar to that which was discussed previously as illustrated in Figure 1. Likewise, server **109** again confirms the validity of software license key **105** and issues updated software license **213** to computer **203** via a license issue **211.** As before, software license **213** is linked to computer **203** via fingerprint **215,** such that license **213** does not enable software **101** to operate on any other computer besides computer **203.**

### Duplicated Instances of a Software License

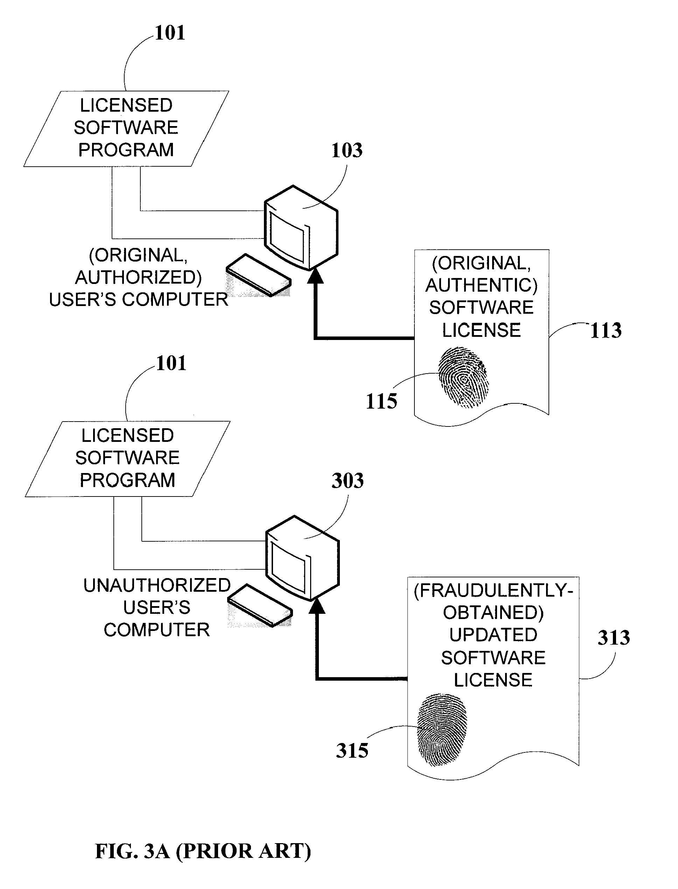

As previously noted and described, the enforcement of the terms of the software license depends on the linking of the license to a specific computer via a fingerprint. As further noted and described, however, provision is made for the user to be able to obtain an updated license which is linked to a changed computer. As illustrated in Figure 3A, there is thus the possibility that a user will attempt to take advantage of this provision to violate the terms of the license by fraudulently obtaining an updated license **313** for use on an unauthorized user's computer **303,** while continuing to use the licensed software on the original, authorized user's computer **103** with original, authentic license **113.** There are various other ways to violate the terms and conditions of the license in such a manner, because fraudulent license **313** is linked to computer **103** via a valid fingerprint **315,** while original license **113** is still linked to computer **103** via valid fingerprint **115.**

Even though they are logically distinct as pieces of information, license **113** and license **313** were both based on the same software key and represent the same legal license. Legally, then, license **113** and license **313** are thus actually *duplicated instances* of the same legal license. The term "legal license" herein denotes a license seen from a legal perspective, as a legal embodiment of an agreement between a licensor and a licensee. A legal license is an abstraction of an agreement between two parties and is thus independent of the specific form or forms in which the agreement is embodied (a non-limiting example of which is a data object). The terms "license instance" or "instance" herein denote a logical or physical embodiment of a particular legal license (a non-limiting example of which is a data object representing the legal license). The terms "duplicated license instance" or "duplicated instance" herein denote a logically or physically distinct instance in a multiplicity of instances of a particular legal license (a non-limiting example of which is a copy of a data object representing the legal license). To clarify this in a non-limiting example: if there exists only a single instance of a particular legal license, that single instance is not a duplicated instance. However, if there exist two or more instances of a particular legal license, those two or more instances are each duplicated instances. The limitation of the prior art is that, due to the non-uniqueness of fingerprints (as discussed above), license instances which are logically-indistinguishable can be associated with physically-distinct computers. It is logical distinctness that enables enforceability, and thus the physically-distinct computers can operate with the logically-identical license instances without detection.

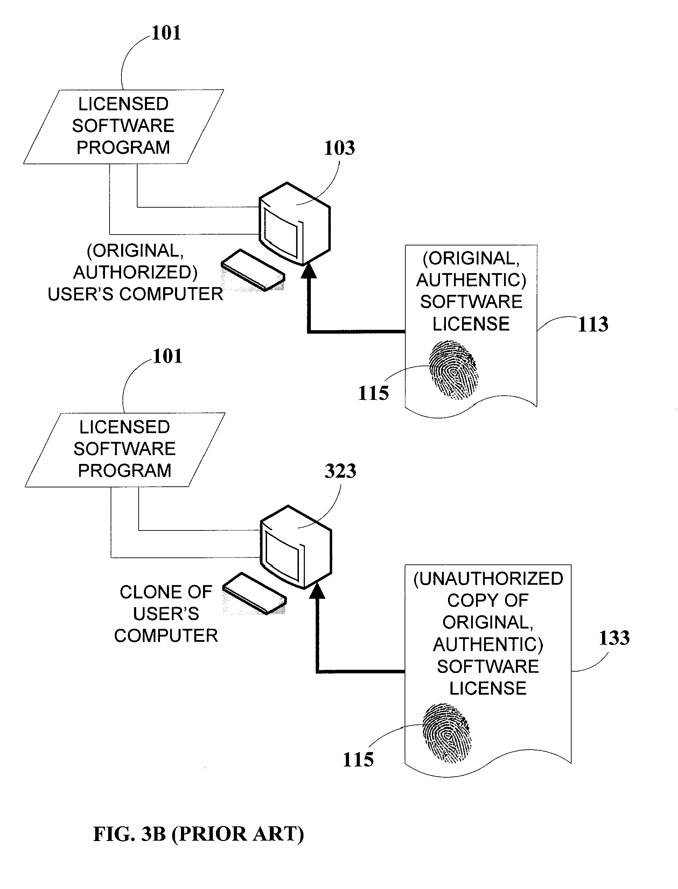

Figure 3B illustrates another case of a duplicated license instance, which involves a clone **323** of original authorized user's computer **103.** The terms "cloned computer" and "clone" herein denote a second computer which is physically-distinct from a first computer, but which is configured in a manner so as to be logically indistinguishable from the first computer. This can be accomplished by copying the substantial features of the first computer (in terms of the data and the structure of the data appearing thereon) into the second computer. In the present context, both original authorized user's computer **103** and cloned computer **323** have the identical fingerprint **115,** which is created, as previously detailed, and based on a function of the computer characteristics which would be the same for a cloned computer. Thus, the user merely has to make an unauthorized copy **133** of original license **113** linked to fingerprint **115** in order to use software **101** on cloned computer **323.**

### The Difficulty of Detectirig Duplicated Instances

It is clearly in a licensor's interest to be able to detect duplicated instances of a software license, such as a license obtained by use of a software key, as described above. Duplicated instances are symptomatic of license violations, and detecting them can aid in the enforcement of the license. Detection of duplicated instances, however, is difficult and unreliable, owing to the non-uniqueness of fingerprints, as discussed above.

### Multi-License Software Keys in a Multiple-License Environment

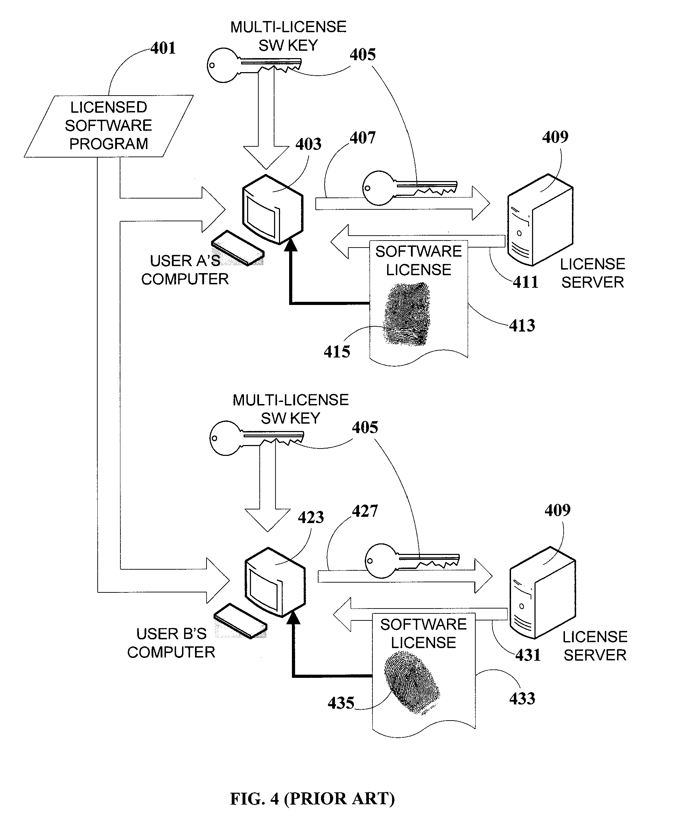

The above-noted difficulty of detecting and identifying duplicated instances of a single license is compounded in a prior-art multiple-license environment, as illustrated conceptually in Figure 4. Legal licenses which permit a multiplicity of authorized users are also denoted as "volume licenses" and "site licenses", both of which provide what is referred to herein by the term "multiple-license environment", which denotes a computer software usage environment that can feature a multiplicity of legally-authorized users for a specified licensed computer program. A "volume license"/"site license" can also be viewed as a single license that supports a multiplicity of individual users operating under the same license. This is functionally-equivalent to the concept of the multiple-license environment (as used herein), where a customer (such as a commercial or institutional customer) obtains a single software key that may be used to request up to a specified number of distinct licenses for a multiplicity of individual users. In the present application, therefore, it is understood that a multiple-license environment belongs to a single customer who wishes to support multiple users within the same environment. The element that identifies the multiple-license environment approach to licensing with the "volume license"/"site license" concept is that a single software key is used to obtain all the individual licenses.

A computer software usage environment that features only one legally-authorized user for a specified licensed computer program is herein denoted as a "single-license environment". The term "software usage environment" herein denotes a computer environment in which software is used, including, but not limited to: individual personal computers; and networks of computers.

In some cases, multiple-license environments are not enforced by the licensed software or other means, but depend on the integrity of the users to comply with the terms of the legal license limiting the number of users for a specific licensed software program. In other cases, multiple-license environments are enforced as detailed below:

Referring to Figure 4, a licensed software program **401** is installed on a computer **403** and, at the same time, on a different computer **423.** Computer **403** is operated by user A (not shown), and computer **423** is operated by user B (not shown). A single multi-license software key **405** is placed in both computer **403** and in computer **423.** When user A wishes to activate software program **401** on computer **403,** multi-license key **405** is sent to license server **409** in a license request **407.** License server **409** validates software key **405** and issues license **413** to computer **403** via a license issue **411.** Likewise, when user B wishes to activate software program **401** on computer **423,** multi-license key **405** is sent to license server **409** in a license request **427.** License server **409** validates software key **405** and issues license **433** to computer **423** via a license issue **431.** For license **413,** a fingerprint **415** identifies computer **403,** and for license **433,** a different fingerprint **435** identifies computer **423.**

It is emphasized that, in contrast to fraudulently-obtained license **313** (Figure 3), license **433** is a legitimate, authentic license having the same status as license **413.** This is the case because software key **405** is a multi-license key capable of supporting multiple licenses. Therefore, license **433** and license **413** are separate valid software licenses, and are *not* duplicated instances of the same license.

In the environment illustrated in Figure 4, the previously-described problem of detecting duplicated instances of a software license is greatly magnified, precisely because the *duplicated instances* of license **113** with fingerprint **115** and license **313** with fingerprint **315** (Figure 3A) fit the same logical pattern as the *multiple licenses* of license **413** with fingerprint **415** and license **433** with fingerprint **435** (Figure 4). Therefore, as difficult as it is in a single-license environment to detect duplicated instances of a license, it is far more difficult to do so in a multiple-license environment. In turn, the difficulty of detecting duplicated instances of a software license encourages the spread of license violations and the unauthorized use of licensed software.

There is thus a need for, and it would be highly advantageous to have, a method for readily and accurately detecting duplicated instances of a software license, particularly for use in a multiple-license environment. This goal is met by the present invention.

### SUMMARY OF THE INVENTION

The present invention is of a method for detecting duplicated instances of a software license, as previously defined herein. Embodiments of the present invention include methods for detecting duplicated instances in a multiple-license environment as well as in a single-license environment. According to embodiments of the present invention, not only is it possible to detect a duplicated instance, but it is also possible to detect the original license instance from which the duplicate was derived.

Embodiments of the present invention achieve the above capabilities by supplementing or replacing the fingerprint with a unique identifier for the computer, and by maintaining a database record of the identifier. The unique identifier ultimately expires and must be updated via a wide-area network (such as the Internet).

When a computer ultimately needs to update an expired unique identifier by sending the software key in a license request, the license server on the wide-area network checks the database to determine if the expired unique identifier has ever been updated before. If not, then the license server updates the computer's unique identifier and issues an updated license to the computer. If the unique identifier has already been updated, then the present request is for a duplicated instance. If the unique identifier is not currently in the database at all, then the license request is invalid and is refused. If the request is made without a unique identifier, then the request is for a new license on the multi-license software key, and the database is checked to see that the limit of licenses permitted on the software key has not been exceeded. In related embodiments, the license server database also contains information relating to the individual users, and can accept requests to terminate a license.

Therefore, according to the present invention there is provided a software license for a computer program installed on a computer, the software license including a unique identifier for identifying the computer, (a) wherein the unique identifier is generated by a remote license server, (b) wherein the unique identifier is embedded within the computer, (c) wherein the unique identifier has a predetermined expiration time and contains a predetermined function of the expiration time, and (d) wherein the computer program runs on the computer only when the license is installed on the computer.

Also, according to the present invention there is provided a software license for a computer program installed on a computer, the software license including a unique identifier for identifying the computer, (a) wherein the unique identifier is generated by a remote license server, (b) wherein the unique identifier is embedded within the computer, (c) wherein the unique identifier is combined with a fingerprint of the computer, and (d) wherein the computer program runs on the computer only when the license is installed on the computer.

In addition, according to the present invention there is provided a method for issuing a software license from a licensor for a computer program installed on a computer, the method including: (a) providing a software key specifying a maximum number of licenses; (b) receiving an issue request with the software key; (c) if the number of licenses already issued is not less than the maximum number of licenses, then refusing the issue request; otherwise fulfilling the issue request by: (d) generating a unique identifier; (e) storing the unique identifier for future reference, to verify update requests; (f) generating a license containing the unique identifier; (g) embedding the unique identifier in the computer; and (h) sending the license to the computer.

Moreover, according to the present invention there is provided a method for updating a software license from a licensor for a computer program installed on a computer, the software license having a current unique identifier, the method including: (a) storing the current unique identifier for future reference, to verify update requests; (b) receiving an update request with a received unique identifier; (c) if the received unique identifier is not the same as the current unique identifier, then refusing the update request; otherwise fulfilling the update request by: (d) generating an updated unique identifier; (e) generating an updated license containing the updated unique identifier; (f) embedding the updated unique identifier in the computer; and (g) sending the updated license to the computer.

According to one aspect of the present invention, there is provided a computer program product to perform any or all of the methods of the invention.

### BRIEF DESCRIPTION OF THE DRAWINGS

The invention is herein described, by way of example only, with reference to the accompanying drawings, wherein:
Figure 1 is a conceptual flow diagram showing a prior-art scheme for obtaining a license to use a licensed software program on a computer, by employing a software license key;
Figure 2A is a conceptual diagram illustrating a changed computer with a changed fingerprint;
Figure 2B is a conceptual flow diagram showing a prior-art scheme for obtaining an updated license to use a licensed software program for a changed computer;
Figure 3A conceptually illustrates a duplicated instance of a software license involving both an original software license and an updated license which has been fraudulently obtained;
Figure 3B conceptually illustrates a duplicated instance of a software license involving both an original software license and an unauthorized copy of the original license for use on a clone of the original computer;
Figure 4 conceptually illustrates a prior-art multi-license software key in a multiple-license environment;
Figure 5A conceptually illustrates a unique identifier according to an embodiment of the present invention, replacing a fingerprint for linking a software license to the computer;
Figure 5B illustrates a license update request and license update for a license having a unique identifier, according to embodiments of the present invention;
Figure 5C conceptually illustrates a unique identifier **505** according to an embodiment of the present invention, wherein unique identifier **505** contains a function of the time of issue and a function of an expiration time for the unique identifier;
Figure 5D conceptually illustrates a configuration for a unique identifier according to an embodiment of the present invention, wherein the unique identifier is combined with a fingerprint to link a license to a computer;
Figure 6 conceptually illustrates the tracking of unique identifiers in a multiple-license environment, according to embodiments of the present invention;
Figure 7 illustrates the occurrence of a duplicated instance of a software license and the detection thereof according to embodiments of the present invention;
Figure 8 is a flowchart of a method for issuing and updating a software license, and for detecting duplicated instances of that license, according to an embodiment of the present invention;
Figure 9 is a data schema for a unique identifier source record to be encrypted according to an embodiment of the present invention.

### DESCRIPTION OF THE PREFERRED EMBODIMENTS

The principles and operation of a method for detecting duplicated instances of a software license according to embodiments of the present invention may be understood with reference to the drawings and the accompanying description.

### Unique Identifier for a Computer

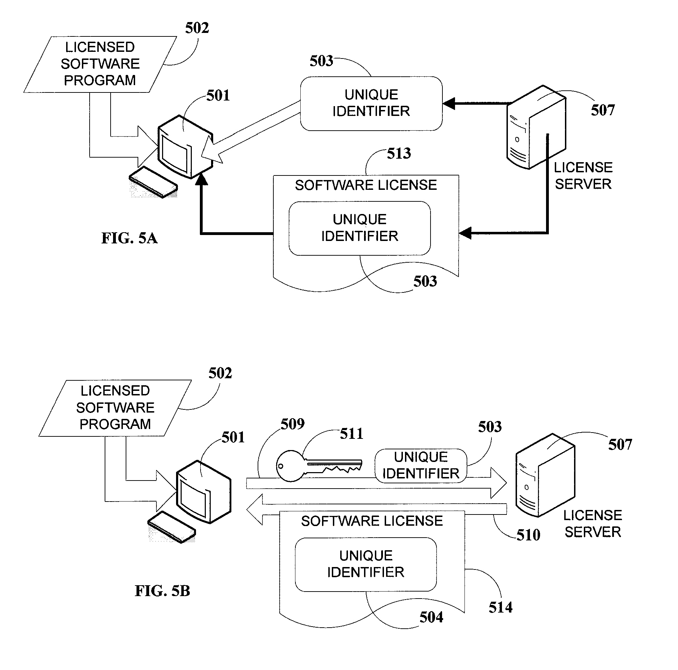

Figure 5A conceptually illustrates a configuration for a unique identifier according to an embodiment of the present invention, wherein linking a license **513** to a specific computer **501** is performed by a unique identifier **503,** which is generated by a remote license server **507,** and which is embedded in a non-volatile location in computer **501.** Unique identifier **503** is referenced by license **513,** which is generated by license server **507.** Because unique identifier **503** is embedded within computer **501,** license **513** is thereby linked to computer **501** via unique identifier **503** instead of a fingerprint. For enforcing the license, licensed software **502** does not operate on a computer without a license corresponding to the unique identifier embedded therein.

The terms "remote license server" and "license server" herein denote a server which is physically located apart from the computer to which the license is furnished, and which is connected to that computer via a data communications link. Data communications links herein, include, but are not limited to: computer networks; cables; wireless connections; modems; and interfacing devices.

According to preferred embodiments of the present invention, the data communications link is the Internet. According to embodiments of the present invention, unique identifier **503** is a data object generated by license server **507,** and can include, but is not limited to: numbers; character strings; other data; or combinations thereof, which can be assigned uniquely to a computer, to uniquely identify that computer. Because the unique identifier is a data object, a copy of a unique identifier is equivalent to the unique identifier itself.

In an embodiment of the present invention, a unique identifier is a sequentially-assigned integer; in another embodiment, a unique identifier is a randomly-generated number having a suitably-high probability of being different from all other such randomly-generated numbers. In a further embodiment of the present invention, a unique identifier is cryptographically-authenticated and/or encrypted for later validation to confirm authenticity and/or to prevent unauthorized persons from knowing the contents thereof.

In a still further embodiment of the present invention, unique identifier **503** is embedded in computer **501** in a non-volatile location that is hard for a user to locate. Such hard-to-locate non-volatile locations include, but are not limited to: unused storage space on a hard disk; an alternate data stream (ADS) of a file; the operating system registry; and combinations of the foregoing. In addition, steganographic methods that are well-known in the art can also be used to embed unique identifiers in a manner that is hard for a user to locate.

Figure 5B illustrates a license update request **509** from computer **501** to license server **507** according to embodiments of the present invention. As part of license update request **509,** unique identifier **503** is sent to license server **507.** In an embodiment of the present invention, a software key **511** is sent along with unique identifier **503** to license server **507** as part of license update request **509.** When license server **507** fulfills license update request **509** in a license update **510,** an updated software license **514** is sent to computer **501,** containing a new unique identifier **504,** which is distinct from previous unique identifier **503.** Whenever computer **501** thereafter sends an update request to license server **507** for an update to the current license, the current unique identifier is sent to license server **507** with the license update request.

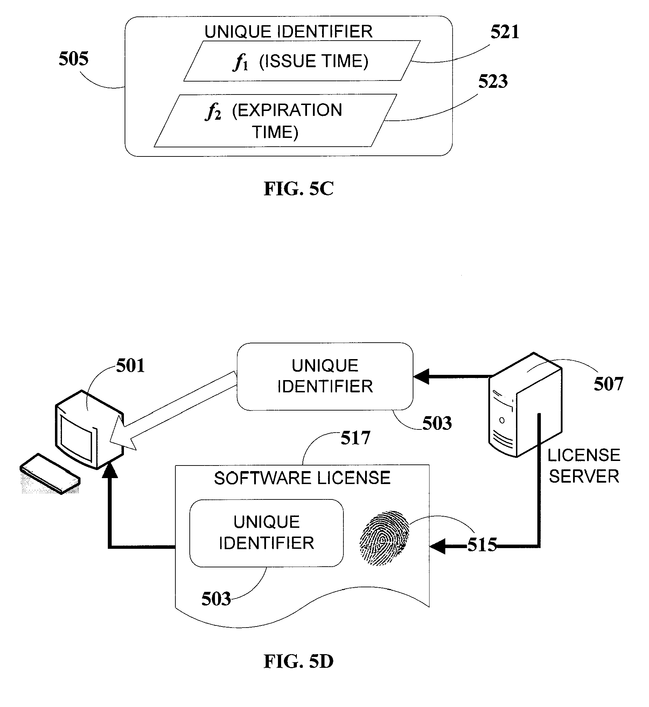

Figure 5C illustrates a unique identifier **505** according to yet another embodiment of the present invention, wherein unique identifier **505** contains a first predetermined function **521** of the time of issue by the license server. The term "time of issue" herein denotes the time that the license server issues a license, including both the original issue of the license as well as the time of update of the license. In a still further embodiment, unique identifier **505** contains a second predetermined function **523** of a predetermined expiration time of unique identifier **505,** after which identifier **505** is no longer valid for identifying a computer. In an embodiment of the present invention, the function of the expiration time is the expiration time itself - the unique identifier contains an expiration time. In alternate embodiments, both functions **521** and **523** are combined into a single function; or equivalently, second function **523** contains a time period (a non-limiting example of which is 30 days). The purpose of including such time functions is to provide for an expiration of unique identifier **505.** It is desirable that after a suitable time the license server should be contacted for an update of the license. It is emphasized that fingerprints do not have predetermined expiration times. A fingerprint may eventually cease to identify the computer, in which case the fingerprint and license must be updated, but this does not occur at a predetermined time. Thus, unique identifiers according to these embodiments of the present invention are distinct from fingerprints in that they have predetermined expiration times.

Figure 5D conceptually illustrates a configuration for a unique identifier according to another embodiment of the present invention, wherein a unique identifier **503** is combined with a fingerprint **515** to link a license **517** to computer **501.** As described above, unique identifier **503** is embedded in computer **501.** Fingerprint **515,** however, does not have to be embedded in computer **501,** because a fingerprint is, as suggested previously, similar to a hash of a computer's individual characteristics. In this configuration, fingerprint **515** provides the trigger for contacting the license server for an update of the license, in the manner previously described, where normal computer usage over time eventually causes a mismatch between the computer and the fingerprint.

### Tracking the Unique Identifier

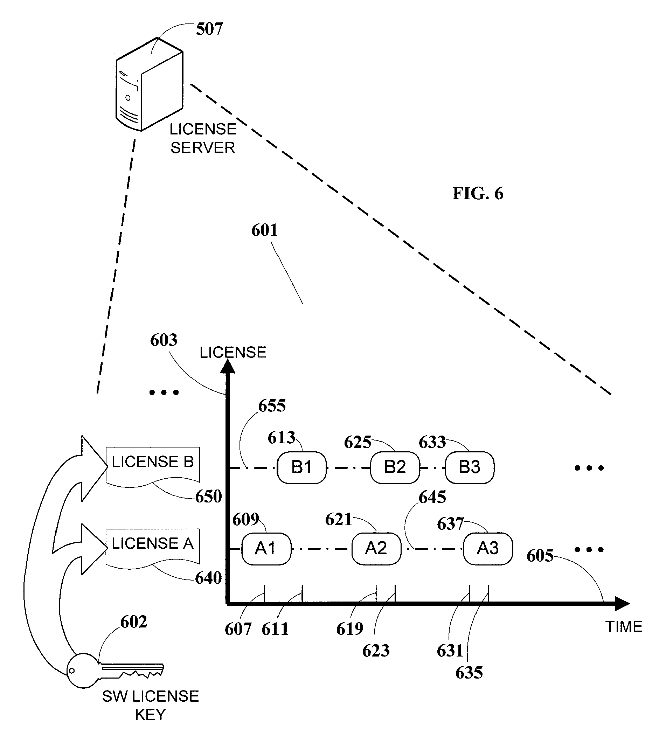

Figure 6 conceptually illustrates a data configuration **601** in license server **507** (as in Figures 5A, 5C, and 5D) for storing unique identifiers, for future reference and to verify requests to update the license, according to embodiments of the present invention.

Data configuration **601** is shown for multiple licenses, such as would be found in a multiple-license environment, as previously discussed. However, data configurations according to the present invention are not limited to multiple-license environments, and in embodiments of the present invention are for single-license environments as well.

A unique identifier chain **645** is for a License **640** ("License A") and a unique identifier chain **655** is for a license **650** ("License B"). These licenses are both authorized in the multiple-license environment and are both requested by via the same multi-license key **602** in the manner as described previously (the multiple-license environment illustrated in Figure 6 supports a multiplicity of individual user licenses issued to the same customer, as previously discussed). Each of the foregoing unique identifier chains contains one or more references to unique identifiers as previously described and illustrated (Figures 5A, 5C, and 5D). A reference to a unique identifier contains enough information to uniquely identify the unique identifier, and in an embodiment of the present invention, such a reference is the unique identifier itself. (As noted previously, a copy of a unique identifier is equivalent to the unique identifier itself.)

In Figure 6, the different unique identifier chains are shown along a license axis **603,** and extend in the direction of a time axis **605.** At a time **607,** a unique identifier **609** (designated as "A1") is issued by license server **507** to identify a computer (not shown). Unique identifier **609** is embedded in the computer and referenced by the issued license as shown in Figure 5A and discussed previously. At a later time **619,** the license for the computer originally identified by "A1" is updated with an updated license, and unique identifier **609** is replaced by a unique identifier **621** (designated as "A2"). At a still later time **635,** the license for the computer now identified by "A2" is again updated with an updated license, and unique identifier **621** is replaced by a unique identifier **637** (designated as "A3"). This process of updates for license **640** ("License A") can continue further along chain **645.**

Likewise, at a time **611,** a unique identifier **613** (designated as "B1") is issued by license server **507** to identify a second computer (not shown). In a similar manner, identifier **613** is embedded in the second computer and referenced by the issued license as shown in Figure 5A and discussed previously. At a later time **623,** the license for the computer originally identified by "B1" is updated with an updated license, and unique identifier **613** is replaced by a unique identifier **625** (designated as "B2"). At a still later time **631,** the license for the computer now identified by "B2" is again updated with an updated license, and unique identifier **625** is replaced by a unique identifier **633** (designated as "B3"). This process of updates for license **650** ("License B") can also continue further along chain **655.**

In an embodiment of the present invention, a unique identifier on a chain is stored with other records of the associated license, and is accessible to the licensor even when that unique identifier is no longer used to identify a computer. In this embodiment, for example, unique identifier **609** ("A1") and unique identifier **621** ("A2") are stored as being associated with "License A" and accessible to the licensor even after unique identifier **637** ("A3") is used to identify the computer. In another embodiment of the present invention, only the current unique identifier (such as unique identifier **637)** is stored and accessible as associated with the license (license **640** in this non-limiting example). The current unique identifier for a chain is herein denoted by the term "head-of-chain", and is accessible to license server **507** for use in updating the license.

In a similar fashion, more licenses can be added, up to the limit stipulated by the multiple-license agreement. For a single-license environment, only a single chain (e.g., chain **645)** would be present. It is once again emphasized that for a multiple-license environment, distinct license instances (such as license **640** and license **650**) are not duplicated instances, but represent authorized separate licenses.

### Detecting a Duplicated Instance

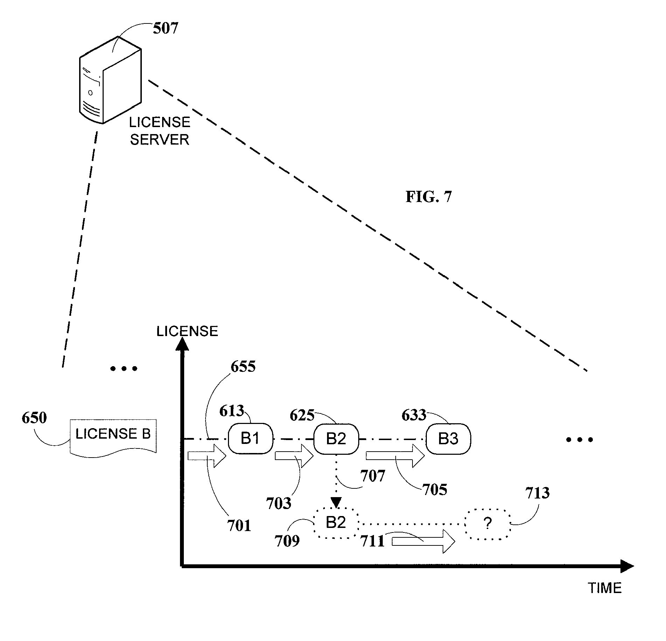

Figure 7 illustrates an occurrence of a duplicated license instance and the detection thereof according to embodiments of the present invention. In this non-limiting and hypothetical scenario, "License B" is issued via an issue request **701,** with the computer identified by unique identifier **613** ("B1"), as previously described and illustrated in Figure 5A. At a later time, "License B" is updated via an update request **703.** At a still later time, "License B" is again updated via an update request **705.** Previous to update request **705,** however, the computer was cloned, or an unauthorized copy of the licensed software was made in some other fashion, via a copying process **707,** resulting in a duplicated instance with a unique identifier **709,** which is a copy of unique identifier **625** ("B2").

At some point, the computer running the unauthorized copy of the licensed software will have to update the license. As previously discussed, this is enforced by configuring the unique identifier with an expiration (Figure 5C) and/or associating the unique identifier with a fingerprint (Figure 5D). When the computer running the unauthorized copy of the licensed software sends a license update request to the license server, the duplicated instance of the unique identifier will also be sent to the license server. This is illustrated in Figure 7, where duplicated instance **709** is sent via license update request **711,** with the intention of receiving an updated unique identifier **713.**

The duplicated instance is then detected immediately, because the original unique identifier **625** has previously been updated so that the current unique identifier for "License B" **650** is unique identifier **633** ("B3"). The duplicated instance is detected because associated unique identifier **709** does not match head-of-chain unique identifier **633.**

Note that in a non-limiting alternate scenario, license update request **711** is made prior to update request **705,** and in this alternate scenario it is unique identifier **625** which is still the head-of-chain, and hence license update request **711** will be considered legitimate, and will result in the license update with unique identifier "B3". The duplicated instance, however, will still be detected, as soon as license update request **705** is made. In other words, the first license update request made for a duplicated instance will be considered legitimate, and all subsequent license update requests for that duplicated instance will be detected as coming from a duplicated instance. In effect, then, embodiments of the present invention consider that only one of the duplicated instances to be legitimate, and the rest - regardless of which specific instances they happen to be - as unauthorized duplicated instances.

In the embodiment of the present invention which stores only the head-of-chain, duplicate instances will be detected, but the precise point of the unauthorized duplication cannot be determined. In a multiple-license environment, for example, it will not be possible to determine from which license the unauthorized copies were derived. In embodiments of the present invention which store all the previous unique identifiers, however, it is possible to determine which license was copied to produce the unauthorized copies.

### Method for Issuing and Updating Licenses, and for Detecting Duplicated Instances

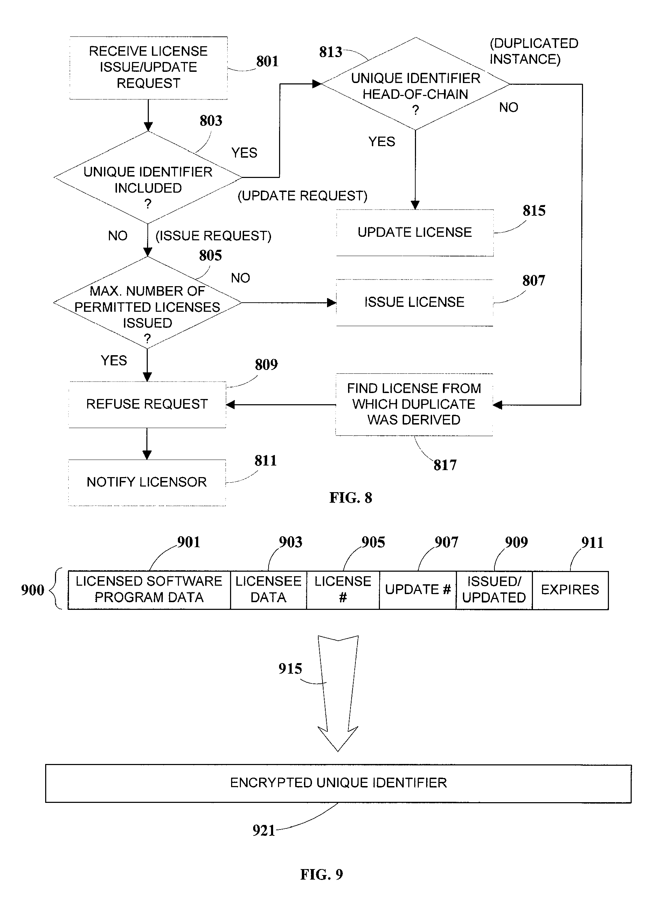

Figure 8 is a flowchart of a method according to an embodiment of the present invention for issuing and updating software licenses, and for detecting duplicated instances of that license.

At a step **801,** a license server receives a request to issue a software license or to update a software license. Typically a software license key (such as key **105** in Figure 1) would accompany the request. At a decision point **803,** if a unique identifier accompanies the request, it is a license update request and flow branches to a decision point **813.** If a unique identifier does not accompany the request, it is considered a license issue request and flow branches to a decision point **805.**

For a license issue request, decision point **805** determines whether any further licenses are permitted under the license agreement. If the number of licenses already issued does not exceed the maximum number of licenses, then flow branches to a step **807,** in which a new license is issued, as previously described and as illustrated in Figure 5A. Otherwise, if the maximum number of licenses has already been reached, however, flow branches to a step **809** in which the request is refused and the licensor is then notified in a step **811.** According to embodiments of the present invention, the maximum number of licenses is specified by the software key. For a single-license environment, the maximum number of licenses specified by a software license key is 1. By default, if a maximum number of licenses is not explicitly specified in a software key, the maximum number of licenses is understood to be specified as 1. By virtue of the notification of step **811,** the licensor can be advised of an attempt to obtain excessive licenses - that the licensee is attempting to obtain more licenses than the agreement currently allows. Thus, the licensor can optionally contact the licensee about increasing the license limits.

For a license upgrade request, decision point **813** checks to see if the supplied unique identifier is head-of-chain. As previously-detailed, if the unique identifier is head-of-chain, then the update request is legitimate, and in a step **815,** the license server updates the license, as previously described and illustrated in Figure 5B. If, however, the unique identifier is not head-of-chain, this condition indicates a duplicated license instance, as previously detailed, and in a step **817,** the license server (or other facility) determines from the supplied unique identifier which license, and possibly which user, was the source of the duplicated license instance. In a step **809,** the update request is refused, and in a step **811,** the licensor is notified as to the violation of the license agreement.

In a related embodiment of the present invention, the license server can accept requests to terminate a particular license. Such a request can be from the licensor, for example to terminate the license of a licensee who has been making unauthorized duplicates of a license. A licensee, particularly in the case of a multiple-license environment, can also request termination of a license, for example when an employee who has been given a license to use the software leaves the company.

To terminate a license, the license server need only refuse to update the license. At the expiration of the unique identifier, the license terminates and the software program no longer operates on the computer of the former licensee.

### Example of a Unique Identifier Data Structure

An embodiment of the present invention has a non-limiting example of a unique identifier whose data structure is shown in Figure 9. Source data **900** includes, but is not limited to: a licensed program descriptor field **901,** which specifies the program and version of the software; licensee data **903,** which specifies the licensee (name, company, address, etc.); a license number **905** (for a license in a multiple-license environment); an update number **907** (where the number 0 represents the original issue); a starting timestamp **909,** which gives the time or date of issue/update; and an expiration timestamp **911,** which gives the time or date past which the license is no longer valid, and before which an update should be performed.

In an encryption operation **915,** source data **900** is encrypted to yield a unique identifier **921** for including in licenses and embedding in the computer, as previously described. After encryption, unique identifier **921** looks like a random number, but actually contains all the above useful information, which can be retrieved by decrypting with the proper key. Unlike a random number, however, unique identifier **921** is guaranteed to be unique - provided, of course, that source data **900** is always different, which will be the case, because update number **907** is sequentially incremented.

Furthermore, including such information in the unique identifier allows immediate identification of the licensee from whose license the duplicated instance was derived. If a unique identifier that is not head-of-chain is received with an update request, it is necessary only to decrypt the unique identifier to identify the licensee - it is not necessary to search any databases.

However, even if the unique identifier does not include such information inherently within, it is possible to maintain a database of unique identifiers as associated with licensees (such as the associations illustrated in Figure 6, where the unique identifiers on the different chains **645** and **655** are associated with different licenses, and hence with different licensees).

In another embodiment of the present invention, the licensor's private key of a public-key encryption key-pair is used for encryption operation **915.** In such a case, unique identifier **921** can be validated as having come from the licensor by using the licensor's public key for decryption. Furthermore, the license enforcement mechanisms of the licensed software program can determine for themselves when unique identifier **921** expires, by examining expiration field **911** directly, after decryption.

### Computer Program Product

A further embodiment of the present invention provides a computer program product for performing the method previously disclosed in the present application or any variant derived therefrom. A computer program product according to this embodiment includes a set of executable commands for a computer, and is incorporated within machine-readable media including, but not limited to: magnetic media; optical media; computer memory; semiconductor memory storage; flash memory storage; and a computer network. The terms "perform", "performing", etc., and "run", "running", when used with reference to a computer program product herein denote the action of a computer when executing the computer program product, as if the computer program product were performing the actions. The term "computer" herein denotes any data processing apparatus capable of, or configured for, executing the set of executable commands to perform the foregoing method, including, but not limited to the devices as previously described as denoted by the term "computer", and as defined below.

### Additional Definitions

The term "computer" herein denotes any device or apparatus capable of executing data processing instructions, including, but not limited to: personal computers; mainframe computers; servers; workstations; data processing systems and clusters; networks and network gateways, routers, switches, hubs, and nodes; embedded systems; processors, terminals; personal digital appliances (PDA); controllers; communications and telephonic devices; and memory devices, storage devices, interface devices, smart cards and tags, security devices, and security tokens having data processing and/or programmable capabilities.

The terms "computer program", "computer software", "computer software program", "software program", "software" herein denote a collection of data processing instructions which can be executed by a computer (as defined above), including, but not limited to, collections of data processing instructions which reside in computer memory, data storage, and recordable media. The term "licensed" when applied to the foregoing terms herein denotes that the authorized use or execution thereof is governed by the terms of a license.

While the invention has been described with respect to a limited number of embodiments, it will be appreciated that many variations, modifications and other applications of the invention may be made.

## Claims

1. A software license for a computer program installed on a computer, the software license comprising a unique identifier for identifying the computer, and **characterized in that**:
• said unique identifier is generated by a remote license server,
• said unique identifier is embedded within the computer,
• said unique identifier has a predetermined expiration time and contains a predetermined function of said expiration time, and
• the computer program runs on the computer only when the license is installed on the computer.

2. The software license of claim 1, further **characterized in that** said unique identifier contains a predetermined function of the license time of issue.

3. A software license for a computer program installed on a computer, the software license comprising a unique identifier for identifying the computer, and **characterized in that**:
• said unique identifier is generated by a remote license server,
• said unique identifier is embedded within the computer,
• said unique identifier is combined with a fingerprint of the computer, and
• the computer program runs on the computer only when the license is installed on the computer.

4. A method for issuing a software license from a licensor for a computer program installed on a computer, the method **characterized by**:
• providing a software key specifying a maximum number of licenses;
• receiving an issue request with said software key;
• if the number of licenses already issued is not less than said maximum number of licenses, then refusing said issue request; otherwise fulfilling said issue request by:
■ generating a unique identifier;
■ storing said unique identifier for future reference, to verify update requests;
■ generating a license containing said unique identifier;
■ embedding said unique identifier in the computer; and
■ sending said license to the computer.

5. The method of claim 4, wherein said refusing said issue request is further **characterized by** notifying the licensor of an attempt to obtain excessive licenses.

6. The method of claim 4 or 5, further **characterized in that** said unique identifier has a predetermined expiration time and contains a predetermined function of said predetermined expiration time.

7. A method for updating a software license from a licensor for a computer program installed on a computer, the software license having a current unique identifier, the method **characterized by**:
• storing the current unique identifier for future reference, to verify update requests;
• receiving an update request with a received unique identifier;
• if said received unique identifier is not the same as the current unique identifier, then refusing said update request; otherwise fulfilling said update request by:
■ generating an updated unique identifier;
■ generating an updated license containing said updated unique identifier;
■ embedding said updated unique identifier in the computer; and
■ sending said updated license to the computer.

8. The method of claim 7, wherein said received unique identifier specifies a licensee, and wherein refusing said update request is further **characterized by**:
■ identifying the licensee specified by said received unique identifier; and
■ notifying the licensor of a duplicated instance of the license.

9. The method of claim 7 or 8, wherein said received unique identifier is associated with licensee, and wherein refusing said update request is further **characterized by**:
■ identifying the licensee associated with said received unique identifier; and
■ notifying the licensor of a duplicated instance of the license.

10. A computer program product operative to perform the method of any of claims 4 to 9.
